(19) Europäisches Patentamt

European Patent Office

Office européen des brevets

(11) **EP 0 756 154 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(51) Int Cl.⁷: **G01D 5/20**, G01P 3/44, H02K 24/00, H01F 38/14, H01F 38/18

(21) Anmeldenummer: **96110223.3**

(22) Anmeldetag: **25.06.1996**

(54) **Schleifringloser Drehmelder**

Resolver without slipring

Résolver sans bague et balais

(84) Benannte Vertragsstaaten:
**CH DE FR GB LI**

(30) Priorität: **25.07.1995 DE 19527156**

(43) Veröffentlichungstag der Anmeldung:
**29.01.1997 Patentblatt 1997/05**

(73) Patentinhaber: **TYCO Electronics Logistics AG**
**9323 Steinach (CH)**

(72) Erfinder: **Logé, Hans**
**85630 Neukeferloh (DE)**

(74) Vertreter: **Klunker . Schmitt-Nilson . Hirsch**
**Winzererstrasse 106**
**80797 München (DE)**

(56) Entgegenhaltungen:
**EP-A- 0 587 142          EP-A- 0 593 351**

• **LOGE H: "NEW HOLLOW-SHAFT RESOLVERS FOR SERVO APPLICATIONS" COMPONENTS, Bd. 27, Nr. 3, 1. Mai 1992, Seiten 19-21, XP000309721**

**Beschreibung**

Die Erfindung betrifft einen schleifringlosen Drehmelder (Resolver) mit einem Stator und einem Rotor, auf denen ein Resolverteil mit mindestens zwei Statorwicklungen und einer Rotorwicklung sowie axial zum Resolverteil versetzt ein Transformatorteil mit einer Transformator-Statorwicklung und einer Transformator-Rotorwicklung angeordnet sind, wobei der Rotor eine zusätzliche Kurzschlußwicklung trägt.

Schleifringlose Drehmelder oder Resolver sind induktive Bauelemente, die aus zwei Transformatoranordnungen bestehen, nämlich dem eigentlichen Drehmelderteil oder Resolverteil und dem Übertrager- bzw. Transformatorteil. In dem Resolverteil wird durch Messung der Ausgangsspannungen als Winkelfunktionen Sinus und Cosinus der mechanische Verdrehungswinkel zwischen Stator und Rotor ermittelt. Der Transformatorteil dagegen dient zur berührungslosen Übertragung der Eingangsspannung zum Rotor. Aufgrund des Transformatorprinzips müssen Drehmelder mit Wechselspannung betrieben werden. Ihr Übertragungsverhalten ist von der Frequenz der Erregerspannung abhängig.

Während das Transformationsverhältnis in einem gewissen Frequenzbereich nahezu konstant bleibt, verschiebt sich die Phase zwischen den Ausgangsspannungen und der Eingangsspannung sehr stark in Abhängigkeit von der Frequenz. Der Frequenzgang der Phasenverschiebung hat einen weitgehend monoton fallenden Verlauf von niedrigen Frequenzen zu höheren Frequenzen hin mit einem Nulldurchgang im oberen Teil des üblichen Arbeitsbereichs. Da bei der Auswertung der Drehmeldersignale eine Gleichrichtung dieser Signale unter Berücksichtigung ihrer Phasenlage zum Erregersignal erfolgen muß (Gleichphasigkeit entspricht positiven Werten, Gegenphasigkeit entspricht negativen Werten), kann die Auswerteelektronik in der Regel nur geringe zusätzliche Phasenverschiebungen tolerieren. Insbesondere dann, wenn Drehmelder mit niedrigen Frequenzen betrieben werden sollen, stellt die Phasenverschiebung ein Problem dar.

Bisher wurde dieses Problem der Phasenverschiebung dadurch gelöst, daß aus der Erregerspannung mittels eines RC-Gliedes ein phasenkorrigiertes Referenzsignal für die Auswerteelektronik erzeugt wurde. Der Austausch eines Drehmelders in einer bestimmten Anwendung mit vorgegebener Auswerteelektronik durch einen Drehmelder mit einer anderen Phasenverschiebung bedeutet in einem solchen Fall, daß das Phasenkorrekturglied der Auswerteelektronik geändert werden muß.

Aus der EP 0 593 351 A1 ist eine Resolveranordnung bekannt, bei der eine Kurzschlußwicklung in Form einer Scheibe oder eines Ringes auf dem Stator oder dem Rotor räumlich im Bereich zwischen dem Resolverteil und dem Transformatorteil angeordnet ist, um den Streufluß des Transformatorteiles von dem Resolverteil abzuschirmen. Diese Maßnahme hat jedoch keinen Einfluß auf die Phasenverschiebung zwischen der Eingangsspannung und den Ausgangsspannungen.

Ziel der vorliegenden Erfindung ist es, durch eine einfache Maßnahme eine Kompensation der Phasenverschiebung in dem Drehmelder selbst zu ermöglichen, die ohne großen Aufwand bereits bei der Fertigung des Drehmelders einbezogen werden kann und die dann eine externe Phasenkorrektur in der Auswerteelektronik überflüssig macht.

Erfindungsgemäß wird dieses Ziel bei einem Drehmelder mit dem eingangs genannten Aufbau dadurch erreicht, daß die Kurzschlußwicklung als Drahtwicklung parallel zur Transformator-Rotorwicklung auf deren Eisenkern angeordnet ist, wobei ihre Windungszahl und ihr Drahtdurchmesser so gewählt sind, daß der durch sie gebildete Tiefpaß bei der Betriebsfrequenz die Phasenverschiebung des Drehmelders zumindest teilweise kompensiert.

Der Leistungsverbrauch der erfindungsgemäß vorgesehenen Kurzschlußwicklung mit ihrer Impedanz L und ihrem Widerstand R hat auf die Übertragungsfunktion des Drehmelders die Wirkung eines Tiefpasses erster Ordnung. Die Eckfrequenz und damit die Wirkung dieses Tiefpasses auf die Phasenverschiebung kann durch Variation der Windungszahl (Änderung von L und R) bzw. durch Variation des Drahtquerschnitts (Änderung von R) in Richtung auf eine optimale Wirkung verändert werden.

Durch das Tiefpaßverhalten wird allerdings auch das Transformationsverhältnis reduziert. Dies kann durch Änderung der Windungszahlverhältnisse jedoch ausgeglichen werden, ohne daß die Phasenverschiebung dadurch wesentlich beeinflußt wird. Der Frequenzgang des Übersetzungsverhältnisses verliert jedoch seinen Bereich mit annähernd konstantem Verlauf. Deshalb eignen sich phasenkorrigierte Drehmelder nur für einen eingeschränkten Frequenzbereich.

Die erfindungsgemäße Kurzschlußwicklung kann beispielsweise mit der gleichen Drahtstärke wie die Trafo-Rotorwicklung ausgeführt werden; entsprechend der gewünschten Phasenverschiebung können aber auch andere Drahtstärken verwendet werden. Die Windungszahl der Kurzschlußwicklung wird in jedem Fall größer als 1, jedoch wesentlich geringer als die Windungszahl der Trafo-Rotorwicklung sein. Bei dem üblichen Aufbau von Drehmeldern kommen Windungszahlen in Betracht, die etwa bei 5 bis 10 % der Transformator-Rotorwicklung liegen.

Die Erfindung wird nachfolgend an Ausführungsbeispielen anhand der Zeichnung näher erläutert. Es zeigt

Figur 1 ein Prinzipschaltbild eines Drehmelders mit Kurzschlußwicklung entsprechend der Erfindung,

Figur 2 den mechanischen Aufbau eines erfindungsgemäß gestalteten Drehmelders, schematisiert im Schnitt,

Figur 3 einen typischen Verlauf der Phasenverschiebung in Abhängigkeit von der Frequenz eines Drehmelders ohne und mit Kurzschlußwicklung und

Figur 4 den Verlauf des Transformationsverhältnisses eines derartigen Drehmelders in Abhängigkeit von der Betriebsfrequenz.

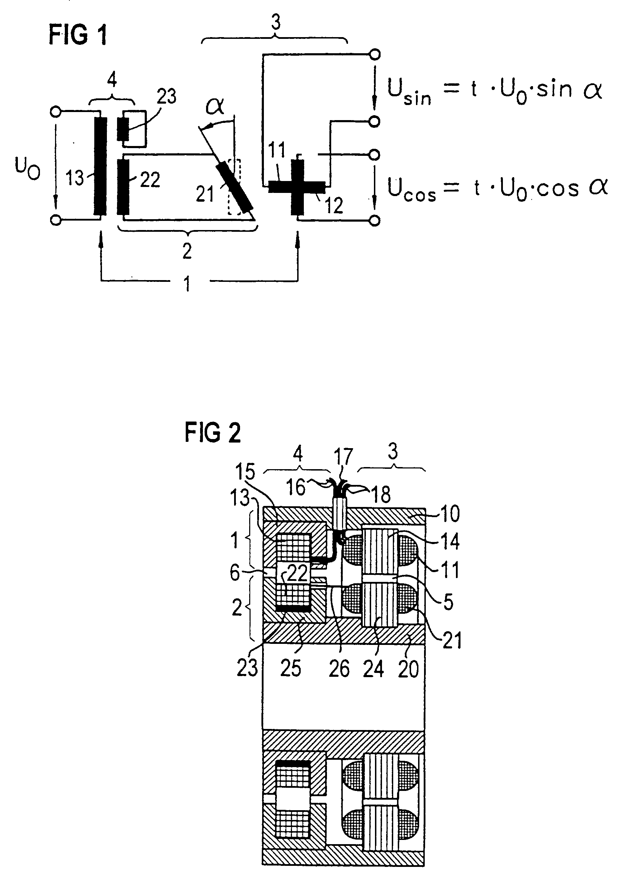

Der in Figur 1 im Prinzipschaltbild dargestellte Drehmelder besitzt einen Stator 1 mit zwei zueinander um 90° versetzt angeordneten Statorwicklungen 11 und 12 sowie einer dazu axial versetzt angeordnete Transformator-Statorwicklung 13. Ein in dem Stator koaxial verdrehbar angeordneter Rotor 2 besitzt eine Resolver-Rotorwicklung 21 sowie eine Transformator-Rotorwicklung 22. Die Statorwicklungen 11 und 12 sowie die Rotorwicklung 21 bilden einen Resolverteil 3 des Drehmelders, während die dazu axial versetzt angeordneten Wicklungen, nämlich die Transformator-Statorwicklung 13 und die Transformator-Rotorwicklung 22, einen Transformatorteil 4 bilden.

Der bisher beschriebene Aufbau entspricht dem allgemein bekannten Prinzip des Drehmelders. An der Transformator-Statorwicklung 13 wird eine Eingangsspannung $U_0$ angelegt. Über die zugehörige Transformator-Rotorwicklung 22 wird diese Spannung an die Resolver-Rotorwicklung 21 angelegt, die in den Resolver-Statorwicklungen 11 und 12 entsprechende Ausgangsspannungen induziert. So wird an der Statorwicklung 11 eine Ausgangsspannung $U_{sin}$ und an der Statorwicklung 12 eine Ausgangsspannung $U_{cos}$ abgegriffen. Diese Ausgangsspannungen hängen von der Winkelstellung $\alpha$ der Rotorwicklung 21 ab nach der folgenden Bestimmung:

$$U_{sin} = t \cdot U_0 \cdot \sin\alpha$$

$$U_{cos} = t \cdot U_0 \cdot \cos\alpha$$

Dabei bezeichnet der Faktor t das Transformationsverhältnis bzw. Übersetzungsverhältnis des Drehmelders; dies ist das Verhältnis zwischen dem Maximalwert der Ausgangsspannungen zum Maximalwert der Eingangsspannung. Aus den gemessenen Ausgangsspannungen $U_{sin}$ und $U_{cos}$ kann also der Verdrehungswinkel $\alpha$ des Rotors abgeleitet werden.

Um nun die von der Betriebsfrequenz abhängige Phasenverschiebung zwischen den Ausgangsspannungen und der Eingangsspannung zu kompensieren, ist in dem Transformatorteil 4 auf dem Rotor zusätzlich und parallel zu der Transformator-Rotorwicklung 22 eine Kurzschlußwicklung 23 mit wenigen Windungen aufgebracht. Diese wirkt mit ihrer Impedanz L und ihrem Widerstand R als Tiefpaß und kompensiert bei entsprechender Bemessung der Windungszahl und des Drahtquerschnittes die unerwünschte Phasenverschiebung.

In Figur 2 ist der mechanische Aufbau eines Drehmelders gemäß Figur 1 etwas schematisiert im Schnitt dargestellt. In einem Gehäuse 10 ist eine Rotorwelle 20 auf nicht dargestellte Weise gelagert; im vorliegenden Beispiel handelt es sich um eine Hohlwelle, die beispielsweise auf eine Maschinenwelle aufgesteckt werden kann, deren Drehwinkel gemessen werden soll. Das Gehäuse 10 bildet mit den in ihm angeordneten Wicklungen 11, 12 und 13 den Stator 1, während die Rotorwelle 20 mit den Wicklungen 21, 22 und 23 den Rotor 2 bildet. Die Wicklungen sind, wie bereits erwähnt, axial versetzt, wobei von dem Resolverteil 3 die Statorwicklungen 11 und die nicht sichtbare Wicklung 12 in einem geschichteten Eisenkern 14 um 90° versetzt angeordnet sind, während die Rotorwicklung 21 ebenfalls auf einem Eisenkern 24 angeordnet ist. Die Eisenkerne 14 und 24 stehen einander unter Bildung eines Luftspaltes 5 gegenüber. Mit einem axialen Versatz zum Resolverteil ist der Transformatorteil 4 angeordnet. Auch er besitzt einen, beispielsweise zweiteiligen, Eisenkern 15 auf dem Stator, in welchem die Transformator-Statorwicklung 13 angeordnet ist. Der Transformatorteil des Rotors 4 trägt einen Eisenkern 25, auf welchem die Transformator-Rotorwicklung 22 angeordnet ist. Zusätzlich trägt dieser Eisenkern - im vorliegenden Beispiel unterhalb der Rotorwicklung 22 - die zusätzliche Kurzschlußwicklung 23. Die Eisenkerne 15 und 25 bilden ebenfalls einen Luftspalt 6. Das Gehäuse 10 und die Rotorwelle 20 bestehen beispielsweise aus unmagnetischem Metall, etwa Edelstahl. Durch das Gehäuse 10 sind im übrigen die Anschlußleitungen geführt, nämlich ein Leitungspaar 16 für die Zufuhr der Eingangsspannung $U_0$ und zwei Leitungspaare 17 und 18 zum Abgriff der Ausgangsspannungen an den Statorwicklungen 11 und 12. Im Inneren wird die Sekundärspannung des Transformatorteils über eine Leitung 26 von der Transformator-Rotorwicklung 22 zur Resolver-Rotorwicklung 21 geführt.

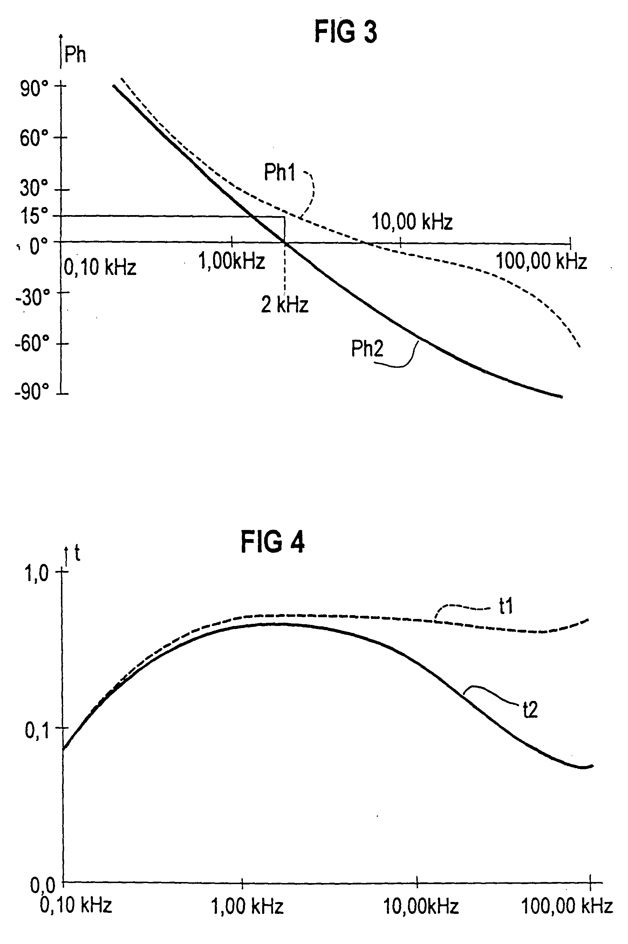

In Figur 3 ist ein typischer Verlauf der Phasenverschiebung eines Drehmelders gezeigt. Die gestrichelte Kurve Ph1 zeigt den Verlauf der Phasenverschiebung ohne Kurzschlußwicklung. Man erkennt, daß diese Phasenverschiebung bei einer Frequenz von annähernd 5 kHz einen Nulldurchgang hat. Bei dieser Frequenz tritt also praktisch keine Phasenverschiebung auf, während zu niedrigeren Frequenzen hin eine positive Phasenverschiebung und zu höheren Frequenzen hin eine, größer werdende negative Phasenverschiebung eintritt. Durch die erfindungsgemäß vorgesehene Kurzschlußwicklung mit Tiefpaßwirkung wird die Kurve verschoben, so daß bei einer angenommenen bestimmten Dimensionierung der Kurzschlußwicklung der mit der durchgehenden Kurve Ph2 gezeigte Verlauf erzielt wird. Diese Kurve hat nunmehr einen Nulldurchgang bei etwa 2 kHz. Liegt also die Betriebsfrequenz des Drehmelders bei 2 kHz, so wird durch die Kurzschlußwicklung die ursprünglich vorhandene Phasenverschiebung von etwa 15° auf annähernd 0° gebracht, also kompensiert.

Figur 4 zeigt noch den Frequenzgang des Transformationsverhältnisses. Die gestrichelte Kurve t1 zeigt die Verhältnisse ohne Kurzschlußwicklung. Demnach verläuft der Frequenzgang des Transformationsverhältnisses in einem gewissen Frequenzbereich,. also etwa oberhalb 1 kHz, auf einem nahezu konstanten Wert, dem spezifizierten Transformationsverhältnis. Dieser Frequenzbereich ist der übliche Arbeitsbereich eines Drehmelders. Durch das Tiefpaßverhalten der erfindungsgemäß vorgesehenen Kurzschlußwicklung wird allerdings das Transformationsverhältnis reduziert. Es gilt nunmehr die durchgezogene Kurve t2, die nur in einem sehr kurzen Bereich das maximale Transformationsverhältnis einhält. Der Drehmelder kann deshalb mit der kompensierenden Kurzschlußwicklung nur in einem verhältnismäßig engen Frequenzbereich betrieben werden. Dies dürfte jedoch keinen Nachteil haben, da der Drehmelder ohnehin in der Phasenverschiebung für eine bestimmte Frequenz kompensiert wurde.

Im folgenden sollen noch einige praktische Dimensionierungsbeispiele angegeben werden.

Beispiel 1: Ein 6-poliger Hohlwellendrehmelder der Größe 21 mit einer Betriebsfrequenz von 3,3 kHz und einer Transformator-Rotorwicklung von 200 Windungen wurde mit verschiedenen Kurzschlußwicklungen versehen, wobei sich die unterschiedlichen Phasenverschiebungen Ph und die unterschiedlichen Transformationsverhältnisse t ergaben:

Tabelle 1

| Windungszahl | Drahtquerschnitt | Phasenverschiebung | Transformationsverhältnis t |
|---|---|---|---|
| Ohne Kurzschlußwicklung | --- | + 31° | --- |
| 6 | 0,0254 mm$^2$ | + 21° | - 10 % |
| 6 | 0,0508 mm$^2$ | + 14° | - 21 % % |
| 12 | 0,0254 mm$^2$ | + 10° | - 24 % |
| 12 | 0,0508 mm$^2$ | - 2° | - 43 % % |

Wie aus Tabelle 1 hervorgeht, wurde die Phasenverschiebung mit 12 Windungen von 0,0254 mm$^2$ Drahtquerschnitt auf 10° kompensiert und mit 12 Windungen bei einem Drahtquerschnitt von 0,0508 mm$^2$ auf - 2° überkompensiert. Das veränderte Transformationsverhältnis t kann dann zusätzlich durch eine Änderung der übrigen Windungszahlen kompensiert werden.

Beispiel 2: Ein zweipoliger Hohlwellendrehmelder der Größe 15 mit einer Transformator-Rotorwicklung von 180 Windungen und einer Betriebsfrequenz von 3,4 kHz wurde mit einer Kurzschlußwicklung versehen, wobei das Transformationsverhältnis durch Anpassung der Transformator-Rotorwicklung konstant gehalten wurde. Es ergab sich dann folgender Wert:

Tabelle 2 .

| Windungszahl | Drahtdurchmesser | Phasenverschiebung |
|---|---|---|
| Ohne Kurzschlußwicklung | --- | + 26° |
| 18 | 0,125 mm | + 5° |

Mit der vorgesehenen Kurzschlußwicklung von 18 Windungen bei einem Drahtdurchmesser von 0,125 mm (entspricht dem Draht der Rotorwicklung) ergab sich eine Reduzierung der Phasenverschiebung auf + 5°, was für die meisten Anwendungen ausreichend ist.

**Patentansprüche**

1.   Schleifringloser Drehmelder mit einem Stator (1) und einem Rotor (2), auf denen ein Resolverteil (3) mit mindestens zwei Statorwicklungen (11, 12) und mindestens einer Rotorwicklung (21) sowie axial zum Resolverteil versetzt ein Transformatorteil (4) mit einer Transformator-Statorwicklung (13) und einer Transformator-Rotorwicklung (22) angeordnet sind, wobei der Rotor (2) eine zusätzliche Kurzschlußwicklung (23) trägt, **dadurch gekennzeichnet, daß** die Kurzschlußwicklung (23) als Drahtwicklung parallel zur Transformator-Rotorwicklung (22) auf deren Eisenkern (25) angeordnet ist, wobei ihre Windungszahl und ihr Drahtdurchmesser so gewählt sind, daß der durch sie gebildete Tiefpaß bei der Betriebsfrequenz die Phasenverschiebung des Drehmelders zumindest teilweise kompensiert.

**2.** Drehmelder nach Anspruch 1, **dadurch gekennzeichnet, daß** die Windungszahl der Kurzschlußwicklung (23) mehr als 1 und weniger als 1/4 der Windungszahl der Transformator-Rotorwicklung (22) beträgt.

**3.** Drehmelder nach Anspruch 1 oder 2, **dadurch gekennzeichnet, daß** die Kurzschlußwicklung (23) nach Durchmesser und Windungszahl so gewählt ist, daß die Phasenverschiebung bis auf einen Rest von 0 bis 10° kompensiert wird.

**4.** Drehmelder nach einem der Ansprüche 1 bis 3, **dadurch gekennzeichnet, daß** für die Kurzschlußwicklung (23) die gleiche Drahtstärke wie für die Transformator-Rotorwicklung (22) verwendet ist.

**5.** Drehmelder nach einem der Ansprüche 1 bis 4, **dadurch gekennzeichnet, daß** das Transformationsverhältnis (t) durch Anpassung der Windungszahlen des Transformatorteils (4) konstant gehalten ist.

**Claims**

**1.** A resolver without slip ring, having a stator (1) and a rotor (2) on which there are arranged a resolver part (3) having at least two stator windings (11, 12) and at least one rotor winding (21) and, offset axially with respect to the resolver part, a transformer part (4) having a transformer stator winding (13) and a transformer rotor winding (22), the rotor (2) carrying an additional short-circuited winding (23), **characterised in that** the short-circuited winding (23) is in the form of a wire winding arranged parallel to the transformer rotor winding (22) on the iron core (25) thereof, the number of windings it has and the diameter of its wire being selected such that the low-pass filter formed thereby at operating frequency at least partly compensates for the phase angle of the resolver.

**2.** A resolver according to claim 1, **characterised in that** the number of windings of the short-circuited winding (23) is greater than I and less than ¼ of the number of windings of the transformer rotor winding (22).

**3.** A resolver according to claim 1 or 2, **characterised in that** the diameter and number of windings of the short-circuited winding (23) are selected such that the phase angle is compensated apart from a residual 0 to 10°.

**4.** A resolver according to one of claims 1 to 3, **characterised in that** the same wire thickness is used for the short-circuited winding (23) as for the transformer rotor winding (22).

**5.** A resolver according to one of claims 1 to 4, **characterised in that** the transformation ratio (t) is kept constant by adjusting the number of windings of the transformer part (4).

**Revendications**

**1.** Résolver sans bague collectrice comportant un stator (1) et un rotor (2), sur lesquels sont agencées une partie de résolver (3) comportant au moins deux enroulements de stator (11, 12) et au moins un enroulement de rotor (21) ainsi qu'une partie de transformateur (4) décalée axialement par rapport à la partie du résolver, comportant un enroulement de stator du transformateur (13) et un enroulement de rotor du transformateur (22), le rotor (2) comportant un enroulement à court-circuit additionnel (23), **caractérisé en ce que** l'enroulement à court-circuit (23) est agencé sous forme d'un enroulement à fils parallèlement à l'enroulement de rotor du transformateur (22), sur le noyau de fer correspondant (25), le nombre des enroulements et le diamètre du fil étant choisis de sorte que le passe-bas formé en présence de la fréquence de service assure la compensation au moins partielle du décalage de phase du résolver.

**2.** Résolver selon la revendication 1, **caractérisé en ce que** le nombre des enroulements de l'enroulement à court-circuit (23) est supérieur à 1 et représente moins de ¼ du nombre des enroulements de l'enroulement de rotor du transformateur (22).

**3.** Résolver selon la revendication 1 ou 2, **caractérisé en ce que** le diamètre et le nombre d'enroulements de l'enroulement à court-circuit (23) sont choisis de sorte que le décalage de phase est compensé à une valeur résiduelle comprise entre 0 et 10°.

4. Résolver selon l'une des revendications 1 à 3, **caractérisés en ce que** l'enroulement à court-circuit (23) a la même épaisseur de fil que l'enroulement de rotor du transformateur (22).

5. Résolver selon l'une des revendications 1 à 4, **caractérisé en ce que** le rapport de transformation (t) est maintenu constant par adaptation des nombres d'enroulement de la partie de transformateur (4).

**FIG 1**

$$U_{sin} = t \cdot U_0 \cdot \sin \alpha$$

$$U_{cos} = t \cdot U_0 \cdot \cos \alpha$$

**FIG 2**

7

# FIG 3

# FIG 4